# EUROPÄISCHE PATENTANMELDUNG

(11) **EP 0 804 875 A1**
(43) Veröffentlichungstag der Anmeldung: **05.11.1997**
(21) Anmeldenummer: 97103501.9
(22) Anmeldetag: 04.03.1997
(51) Int. Cl.: A01M 7/00, B67D 5/02

(54) **Landwirtschaftliche Feldspritze**

(30) Priorität: 30.04.1996 DE 19617324
(71) Anmelder: Amazonen-Werke H. Dreyer GmbH & Co. KG, D-49205 Hasbergen (DE)
(72) Erfinder: Tiessen, Reimer-Uwe, 49076 Osnabrück (DE)

(57) **Zusammenfassung**

Landwirtschaftliche Feldspritze mit einem Flüssigkeitstank, der ein Befüllanschlußelement aufweist. Das Befüllanschlußelement (7) ist in der oberen Wand (6) des Tanks (5) angeordnet. Das Befüllanschlußelement (7) weist im Bereich der oberen Wand (6) einen größeren Durchmesser (D) als seinen in Durchflußrichtung (12) gesehen oberen Bereich (10) auf. Im Bereich des größeren Durchmessers (D) ist direkt an den kleineren Durchmesser (1d) anschließenden Bereich (14) zumindest ein Durchbruch (15) in der Wandung (16) des Befüllanschlußes (7) angebracht. Das Befüllanschlußelement (7) weist im Bereich des Durchbruches (15) einen zumindest annähernd senkrecht verlaufenden Bereich auf.

## Beschreibung

Die Erfindung betrifft eine landwirtschaftliche Feldspritze gemäß des Oberbegriffes des Patentanspruches 1.

Eine derartige Feldspritze ist beispielsweise durch die DE-PS 36 30 800 bekannt. Bei dieser bekannten Feldspritze wird der Flüssigkeitstank über einen zwischen dem Deckel und dem Sieb, welches unterhalb der Einfüllöffnung angeordnet ist, angeordneten Befüllanschluß befüllt. Bei dieser Anordnung des Befüllanschlußes besteht die Gefahr, wenn der Wasserdruck in der Befülleitung abfällt und so in der Befülleitung dann ein Unterdruck entsteht, daß durch den Befüllanschluß Flüssigkeit abgesaugt werden kann, so daß die sich im Flüssigkeitstank befindliche Flüssigkeitsmenge in das öffentliche Wassernetz oder zumindest ein Teil davon gelangen kann, wenn der Flüssigkeitstank bis unter den Deckel gefüllt ist.

Der Erfindung liegt die Aufgabe zugrunde, in einfacher Weise eine einfache Befüllvorrichtung für die Feldspritze zu schaffen, wobei in einfacher und kostengünstiger Weise sicher gestellt ist, daß beim evtl. Rücksaugen keine Flüssigkeit aus dem Flüssigkeitstank in das öffentliche Wassernetz gelangen kann.

Diese Aufgabe wird erfindungsgemäß durch die Maßnahmen gemäß des Kennzeichens des Patentanpruches 1 gelöst. Infolge dieser Maßnahmen ist in jedem Falle sicher gestellt, daß keine Flüssigkeit, die bereits mit Spritzmittel versetzt ist und sich im Flüssigkeitstank befindet, beim Druckabfall in der Befülleitung, die in einen Unterdruck umschlägt, aus dem Flüssigkeitstank abgesaugt werden kann, weil oberhalb der oberen Wand des Flüssigkeitstanks in der Befülleitung ein Durchbruch angeordnet ist, so daß von außen Luft in den Befüllanschluß durch den Durchbruch eindringen kann, so daß sicher ein Zurücksaugen verhindert wird. Mittels des Durchbruches in dem Befüllanschluß oberhalb der oberen Wand des Flüssigkeitstanks wird also bei einem Druckabfall in der Befülleitung sichergestellt, daß keine Flüssigkeit aus dem Flüssigkeitstank angesaugt wird, sondern über den Durchbruch Luft in die Befülleitung einströmt.

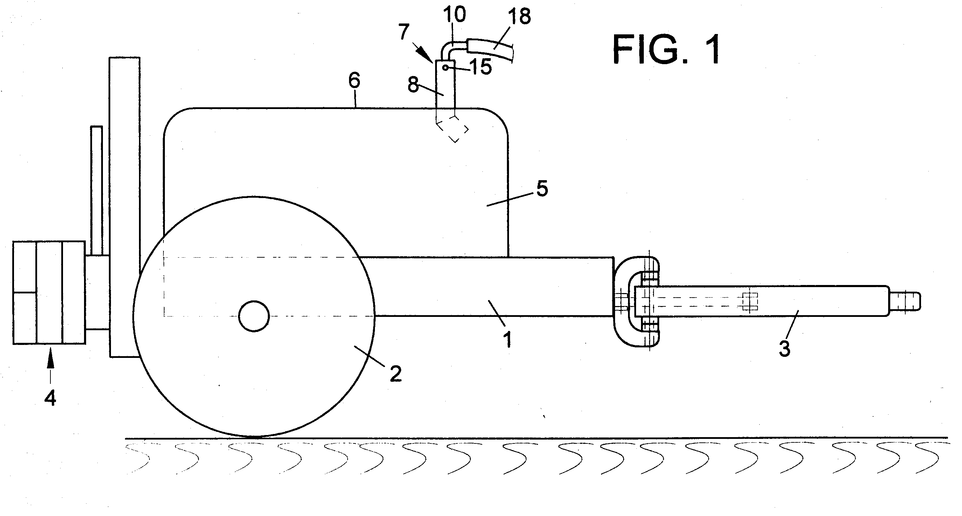

Weitere Einzelheiten der Erfindung sind den übrigen Unteransprüchen, der Beispielsbeschreibung und den Zeichnungen zu entnehmen. Hierbei zeigen
- Fig.1: eine landwirtschaftliche Feldspritze in Seitenansicht und in Prinzipdarstellung und

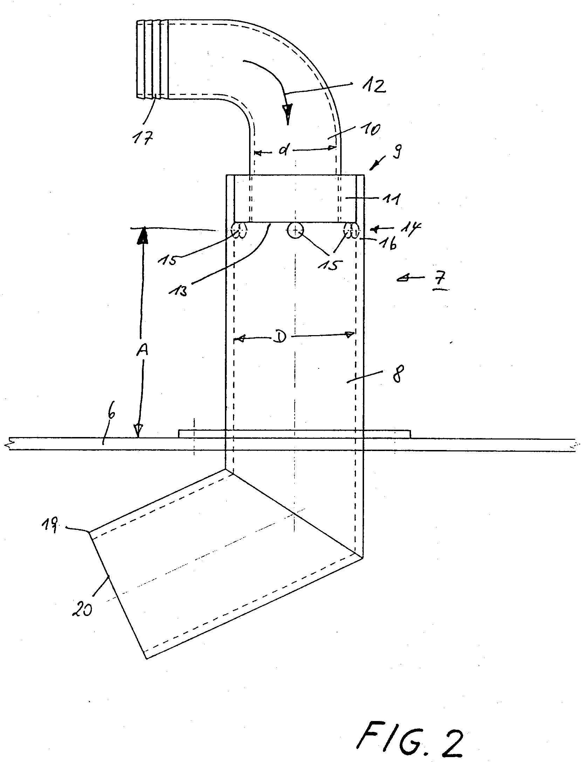

- Fig.2: den Befüllanschluß in vergrößertem Maßstab, angeordnet in der oberen Wand des Flüssigkeitstanks.

Die Feldspritze weist den Rahmen 1 mit dem Fahrwerk 2, der Zugdeichsel 3, dem Spritzgestänge 4 und dem Flüssigkeitstank 5 auf. In der oberen Wand 6 des Flüssigkeitstanks 5 ist das Befüllanschlußelement 7 angeordnet. Das Befüllanschlußelement 7 weist im Bereich der oberen Wandung 6 des Flüssigkeitstanks 5 das Rohr 8 auf. Am oberen Ende 9 dieses Rohres 8 ist ein Rohrwinkel 10 angesetzt. Der Rohrwinkel 10 weist einen kleineren Durchmesser d als das obere Rohr 10 des Befüllanschlußelementes 7 auf. Der Rohrwinkel 10 ist mit einem geeigneten Übergangselement 11 in dem einen größeren Durchmesser D aufweisenden unteren Rohrabschnitt 8 eingesetzt. Der Durchmesser D des unteren Rohrabschnittes 8 ist zumindest um das 1,3-fach, vorzugsweise 1,5-fache größer als der Durchmesser d des oberen Rohrwinkels 10.

Somit weist also das Befüllanschlußelement 7 im Bereich der oberen Wandung 6 einen größeren Durchmesser D als in seinem in Durchflußrichtung 12 gesehen oberen Bereich (Rohrwinkel 10) auf. Im Bereich des den größeren Durchmesser D aufweisenden Rohrstückes 8 sind direkt an dem Übergangsbereich 13 von dem kleineren auf den größeren Durchmesser D im Bereich 14 des den größeren Durchmesser D aufweisenden Rohrstückes 8 (im Ausführungsbeispiel) drei Durchbrüche 15 in der Rohrwandung 16 des Rohres 8 angebracht. Diese Durchbrüche 15 befinden sich in dem senkrecht verlaufenden Bereich 14 des Befüllanschlußelementes 7.

Mit dem vorderen Ende 17 des Rohrwinkels 10 wird ein Schlauch 18, der beispielsweise an das öffentliche Wassernetz angeschlossen ist, verbunden. Durch den Rohrwinkel 10 strömt das Wasser in Pfeilrichtung 12 durch den Rohrwinkel 10 und das den größeren Durchmesser D aufweisende Rohrstück 8 in den Flüssigkeitstank 5. Wenn nun der Flüssigkeitsspiegel im Flüssigkeitstank 5 oberhalb der oberen Kante 19 des Auslaßbereiches 20 des Befüllanschlußelementes 7 befindet, wird durch die Durchbrüche 15 sichergestellt, wenn ein Druckabfall in einen Unterdruck umschlägt, daß durch die Durchbrüche 15 Luft angesaugt wird, so daß keine Flüssigkeit aus dem senkrecht stehende Teil des Befüllanschlußelementes 7 bzw. aus dem Flüssigkeitstank 5 angesaugt wird. Die Durchbrüche 15 befinden sich in einem Abstand A von zumindest 5cm, vorzugsweise 15cm oberhalb der Wandung 6 des Flüssigkeitstanks 5.

## Patentansprüche

1. Landwirtschaftliche Feldspritze mit einem Flüssigkeitstank, der ein Befüllanschlußelement aufweist, dadurch gekennzeichnet, daß das Befüllanschlußelement (7) in der oberen Wand (6) des Tanks (5) angeordnet ist, daß das Befüllanschlußelement (7) im Bereich der oberen Wand (6) einen größeren Durchmesser (D) als seinen in Durchflußrichtung (12) gesehen oberen Bereich (10) aufweist, daß im Bereich des größeren Durchmessers (D) direkt an den kleineren Durchmesser (d) anschließenden Bereich (14) zumindest ein Durchbruch (15) in der Wandung (16) des Befüllanschlußes (7) angebracht ist, daß das Befüllanschlußelement (7) im Bereich des Durchbruches (15) einen zumindest annähernd senkrecht verlaufenden Bereich aufweist.

2. Feldspritze nach Anspruch 1, dadurch gekennzeichnet, daß der größere Durchmesser (D) zumindest um das 1,3-fache, vorzugsweise 1,5-fache größer als der kleinere Durchmesser (d) ist.

3. Feldspritze nach einem oder mehreren der vorstehenden Ansprüche, dadurch gekennzeichnet, daß die Durchbrüche (15) in einem Abstand (A) oberhalb der oberen Wandung (6) des Flüssigkeitstanks (5) sich befinden.
